# EUROPEAN PATENT APPLICATION

(11) **EP 4 851 251 A1**
(43) Date of publication of application: **09.12.2026**
(21) Application number: 24922037.7
(22) Date of filing: 16.12.2024
(51) Int. Cl.: C08L 101/12, C08G 81/00, C08K 3/105, C08K 5/10, C08L 87/00, H01M 8/1016, H01M 8/1018, H01M 10/0565

(54) **METHOD FOR CONTROLLING ION CONDUCTIVITY USING TEMPERATURE-RESPONSIVE POLYMER**

(30) Priority: 29.01.2024 JP 2024010758
(71) Applicant: JNC Corporation, Chiyoda-ku Tokyo 100-8105 (JP); JNC Petrochemical Corporation, Tokyo 100-0004 (JP)
(72) Inventor: YAMAMOTO, Yasuhiro, Ichihara-shi, Chiba 290-8551 (JP); KAMEYAMA, Nao, Ichihara-shi, Chiba 290-8551 (JP)
(74) Representative: Becker, Eberhard
(86) International application number: PCT/JP2024/044468
(87) International publication number: WO 2025/164119

(57) **Abstract**

Provided is a new method for controlling ion conductivity using a polymer solution that dissolves in an organic solvent at a low temperature to form a transparent solution, and undergoes phase separation when the temperature increases, more specifically, using a temperature-responsive polymer that undergoes lower critical solution temperature (LCST)-type phase separation. This method for controlling ion conductivity changes, according to the temperature, the ion conductance of a temperature-responsive ionic solution which contains a temperature-responsive polymer, a salt, and an organic solvent, and in which the salt is dissociated into ionic components. Preferably, the temperature-responsive polymer is a polymer that exhibits lower critical solution temperature-type phase separation.

## Description

### Technical Field

The present invention relates to a method for controlling ionic conduction properties using a temperature-responsive polymer. More specifically, the present invention relates to a method for controlling ionic conduction properties, characterized in that a solution (hereinafter abbreviated as temperature-responsive ionic solution) containing a temperature-responsive polymer, a salt, and an organic solvent, in which the salt is dissociated into ionic components, is heated to cause phase separation in a temperature region higher than a lower critical solution temperature (hereinafter sometimes abbreviated as LCST), thereby decreasing an ionic conductivity.

### Related Art

Ionic conductors are used in various applications such as fuel cells, lithium-ion batteries, and chemical sensors, and have attracted attention in recent years. For example, Patent Document 1 discloses a method of use as a gas sensor. Patent Document 2 discloses a method of use as a lithium-ion battery. Further, Patent Document 3 discloses a method of use as a storage device.

As the applications of ionic conductors expand in this manner, attempts have also been made to control the ionic conduction properties of ionic conductors. For example, Patent Document 4 discloses controlling movement of lithium ions in a lithium-ion battery by a shutdown function of a separator, and numerous attempts like this have been made in the past. However, the shutdown function of the separator has drawbacks such as the inability to freely design a temperature at which shutdown occurs, due to the fact that the function results from shrinkage and melting of a separator film.

Stimulus-responsive polymers, which change their properties or morphology in response to changes in temperature, pH, and the like, are considered for use as various sensors or functional materials. For example, a polymer represented by the following structural formula (a) is known as a polymer that undergoes so-called LCST-type phase separation, in which the polymer dissolves in water at low temperatures to form a transparent solution and causes phase separation upon a temperature rise.

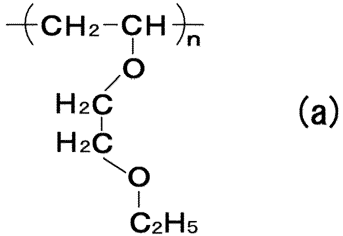

Non-Patent Document 1 discloses a polymer that dissolves in an ionic liquid (ionic solvent) at low temperatures to form a transparent solution and causes phase separation upon a temperature rise. However, for use as a component of an electrical device such as a sensor, while a member composed of water or an ionic solvent that has a high dielectric constant is sought, a member composed of an organic solvent that has a low dielectric constant is also sought. However, there have been few reports on polymers that exhibit LCST-type phase separation in an organic solvent, and attempts to use a temperature-responsive polymer in controlling ionic conduction properties in a solution containing an organic solvent have not been known.

### Prior Art Documents

### Patent Documents

Patent Document 1: Japanese Patent Laid-open No. 2020-060452
Patent Document 2: Japanese Patent Laid-open No. 2023-146966
Patent Document 3: Japanese Patent Laid-open No. 2020-031178
Patent Document 4: Japanese Patent Laid-open No. 2023-099131

### Non-Patent Documents

Non-Patent Document 1: Takayuki Ueki and Masayuki Watanabe, "Lower Critical Solution Temperature Behavior of Linear Polymers in Ionic Liquids and the Corresponding Volume Phase Transition of Polymer Gels," Langmuir, American Chemical Society, 2007, Vol. 23, No. 3, pp. 988-990 (Watanabe, M. et al., Langmuir, (2007), 23, 3, 988-990).

### SUMMARY OF INVENTION

### Technical Problem

The present invention has been made in view of such circumstances in the related art, and an object thereof is to provide a method for controlling ionic conduction properties using a polymer solution that dissolves in an organic solvent at low temperatures to form a transparent solution and causes phase separation upon a temperature rise, that is, a temperature-responsive polymer that causes LCST-type phase separation.

### Solution to Problem

The inventors of the present invention have conducted extensive research to solve the above-mentioned problems, and as a result, have arrived at the present invention. That is, the present invention has the following configurations.
[1] A method for controlling ionic conduction properties, in which an ionic conductivity of a temperature-responsive ionic solution is changed according to temperature, the temperature-responsive ionic solution containing a temperature-responsive polymer, a salt, and an organic solvent, in which the salt is dissociated into ionic components.
[2] The method for controlling ionic conduction properties as described in [1], in which the temperature-responsive polymer is a polymer that exhibits lower critical solution temperature-type phase separation.
[3] The method for controlling ionic conduction properties as described in [1] or [2], in which the temperature-responsive polymer is a polymer that exhibits lower critical solution temperature-type phase separation in the temperature-responsive ionic solution.
[4] The method for controlling ionic conduction properties as described in any one of [1] to [3], in which the organic solvent includes a carbonate-based organic solvent.
[5] The method for controlling ionic conduction properties as described in any one of [1] to [4], in which the salt is a lithium-containing salt.
[6] The method for controlling ionic conduction properties as described in any one of [1] to [5], in which the temperature-responsive ionic solution contains 30% by weight or less of the temperature-responsive polymer.

### Effects of Invention

According to the present invention, a very simple method for controlling ionic conduction properties in a temperature-responsive ionic solution using a temperature-responsive polymer is provided.

### BRIEF DESCRIPTION OF THE DRAWINGS

[FIG. 1] FIG. 1 is a graph showing a relationship between measurement temperature and ionic conductivity change rate.
[FIG. 2] FIG. 2 is a ¹H-NMR spectrum of poly(CEVE-alt-pMeOBzA) being a precursor of a temperature-responsive polymer used in the present invention synthesized in Example 1.
[FIG. 3] FIG. 3 is a ¹H-NMR spectrum of poly([Me2Im][BF4]-alt-pMeOBzA) being the temperature-responsive polymer used in the present invention synthesized in Example 1.

### DESCRIPTION OF THE EMBODIMENTS

The present invention will be described below; however, the present invention is not limited to the specific examples or embodiments described in the DESCRIPTION OF THE EMBODIMENTS, as long as the present invention does not depart from the spirit of the present invention.

The present invention configures a method for controlling ionic conduction properties, in which an ionic conductivity of a temperature-responsive ionic solution is changed according to temperature, the temperature-responsive ionic solution containing a temperature-responsive polymer, a salt, and an organic solvent, in which the salt is dissociated into ionic components, and the ionic conduction properties of the dissociated ions is controlled by phase transition of the temperature-responsive polymer due to temperature.

As one example of the control, at a temperature lower than a lower critical solution temperature (LCST) of a temperature-responsive polymer having the LCST, the ions of the dissociated salt are free to move. However, when the temperature of the solution rises and becomes higher than the LCST of the temperature-responsive polymer having the LCST, the movement of the ions of the dissociated salt is restricted by the temperature-responsive polymer that has undergone phase separation, and the ionic conductivity decreases. This method for controlling ionic conduction properties is particularly preferably used in the case of use as an electrolyte solution for a lithium-ion battery. In the case where the lithium-ion battery causes abnormal heat generation and reaches a temperature equal to or higher than the LCST of the temperature-responsive polymer having the LCST, the ionic conductivity decreases, and the abnormal heat generation of the lithium-ion battery can be stopped. In this case, temperature response of the temperature-responsive polymer may occur reversibly or irreversibly. In the case where phase separation occurs reversibly, since the lithium-ion battery can be used again upon a decrease in temperature, repeated use is possible. In the case where phase separation occurs irreversibly, since the battery is completely prevented from returning to a state of abnormal heat generation, the battery can be relatively safely used.

Regarding methods of phase separation of the temperature-responsive polymer, any method of phase separation may be used as long as the movement of the dissociated ions can be restricted. For example, the temperature-responsive polymer may be precipitated in a globule state, or a new network polymer may be formed by interactions between polymers.

### <Temperature-Responsive Polymer>

The temperature-responsive polymer used in the present invention is not particularly limited as long as it is soluble in a solution containing an organic solvent; however, it is preferable that the temperature-responsive polymer is a temperature-responsive polymer having an LCST.

Preferable examples of the temperature-responsive polymer having an LCST include acrylamide-based polymers and copolymer derivatives, acrylate-based polymers and copolymer derivatives, methacrylate-based polymers and copolymer derivatives, vinyl ether-based polymers and copolymer derivatives, and vinyl-based polymers and copolymer derivatives; particularly preferable examples include vinyl ether-based polymers and copolymer derivatives, and vinyl-based polymers and copolymer derivatives.

A molecular weight of the temperature-responsive polymer is not particularly limited as long as the temperature-responsive polymer is soluble in a solution containing an organic solvent. The temperature-responsive polymer preferably has a number average molecular weight of 1,000 to 500,000. From the viewpoint of achieving a sufficient temperature-responsive effect, the number average molecular weight is preferably 1,000 or more. From the viewpoints of solubility in a solution containing an organic solvent and handleability based on the optimal viscosity of the dissolved solution, the number average molecular weight is preferably 500,000 or less.

Weight average molecular weight/number average molecular weight can be selected depending on whether the control of ionic conduction properties is to be changed rapidly or gradually. In the case of weight average molecular weight/number average molecular weight of 1.25 or less, LCST-type phase separation can be caused at a high speed. The smaller the value of the weight average molecular weight/number average molecular weight, that is, the narrower the molecular weight distribution and the closer to a monodisperse state, the more rapidly a change from a transparent solution to an opaque state due to phase separation occurs at a predetermined temperature upon a temperature rise, and LCST-type phase separation can be caused at a higher speed. Accordingly, from this viewpoint, in the case where it is desired to change the ionic conduction properties rapidly, the value of the weight average molecular weight/number average molecular weight is preferably as close to 1.0 as possible. Considering ease of production and the like, the lower limit of the weight average molecular weight/number average molecular weight is about 1.01. In the case of weight average molecular weight/number average molecular weight of 2.0 or more, LCST-type phase separation can be caused at a low speed. The larger the value of the weight average molecular weight/number average molecular weight, that is, the broader the molecular weight distribution, the more gradually a change from a transparent solution to an opaque state due to phase separation occurs at a predetermined temperature upon a temperature rise, and LCST-type phase separation can be caused at a slower speed. Accordingly, from this viewpoint, in the case where it is desired to change the ionic conduction properties gradually, the value of the weight average molecular weight/number average molecular weight is preferably as large as possible. Considering ease of production and the like, the upper limit of the weight average molecular weight/number average molecular weight is about 10.

The content of the temperature-responsive polymer relative to the temperature-responsive ionic solution is preferably 30% by weight or less, and more preferably 5% by weight or less. From the viewpoints of stability of the inherent performance of the temperature-responsive ionic solution and ease of use in applications, the content is preferably 30% by weight or less. For example, in the case where the temperature-responsive polymer is added to an electrolyte solution of a lithium-ion battery, it is conceivable that the ionic conduction properties inherently possessed by the electrolyte solution prior to addition are maintained due to the optimal viscosity of the electrolyte solution. The content of the temperature-responsive polymer relative to the temperature-responsive ionic solution is preferably 0.01% by weight or more, and more preferably 0.1% by weight or more. From the viewpoint of the control effect due to the phase transition of the temperature-responsive polymer, the content is preferably 0.01% by weight or more.

### <Salt>

The salt used in the present invention can be used without particular limitation as long as it is soluble in a solution containing an organic solvent.

From the viewpoint of ionic conductivity change rate, a high content of the salt is preferable. Specifically, the content of the salt relative to the temperature-responsive ionic solution is preferably 0.1 mol/L or more, more preferably 0.5 mol/L or more, and particularly preferably 1.0 mol/L or more. From the viewpoint of a sufficient change in ionic conductivity, the content of the salt relative to the temperature-responsive ionic solution is preferably 0.1 mol/L or more. From the viewpoint of ease of preparation of the temperature-responsive ionic solution, the content of the salt relative to the temperature-responsive ionic solution is preferably 3 mol/L or less, and more preferably 1.5 mol/L or less. From the viewpoint of solubility of the salt, the content of the salt relative to the temperature-responsive ionic solution is preferably 3 mol/L or less.

One type of salt may be used alone, or two or more types of salts may be used as a mixture.

In the case of use in a lithium-ion battery, the salt is preferably a lithium-containing salt. Specific examples include lithium bis(fluorosulfonyl)imide, lithium bis(trifluoromethanesulfonyl)imide, lithium trifluoromethanesulfonate, lithium hexafluorophosphate, lithium perchlorate, lithium tetrafluoroborate, lithium difluorophosphate, and lithium difluoro(oxalate)borate.

### <Organic Solvent>

The organic solvent used in the present invention can be used without limitation as long as it is a conventionally known organic solvent. While those generally sold as reagents may be purchased and used without problem, one having high purity, such as a battery grade, is more preferable. One type of organic solvent can be used alone, or two or more types of organic solvents can be used as a mixture. For example, in the case of application to a lithium-ion battery, from the viewpoint of solubility of the salt, carbonate-based, ether-based, and ester-based organic solvents are preferable. Specific examples include ethylene carbonate (hereinafter abbreviated as EC), propylene carbonate (hereinafter abbreviated as PC), vinylene carbonate, vinyl ethylene carbonate, fluoroethylene carbonate, dimethyl carbonate, diethyl carbonate (hereinafter abbreviated as DEC), ethyl methyl carbonate (hereinafter abbreviated as EMC), γ-butyrolactone, 1,3-dioxolane, 1,2-dimethoxyethane, 1,2-diethoxyethane, diglyme, triglyme, tetraglyme, methyl acetone, ethyl acetone, methyl difluoroacetone, ethyl trifluoroacetone, methyl propionate, ethyl propionate, propyl propionate, and vinyl acetone.

A commercially available reagent in which the salt has been dissolved in advance may also be used.

### Examples

Hereinafter, the present invention will be described in detail using examples; however, the present invention is not limited to these examples.

### (Example 1)

### (Synthesis of Precursor of Temperature-Responsive Polymer)

### Synthesis of Poly(CEVE-alt-pMeOBzA)

Poly(2-chloroethyl vinyl ether-alt-paramethoxybenzaldehyde) (abbreviated as poly(CEVE-alt-pMeOBzA) in the present specification) synthesized in the examples was a polymer represented by the following formula. n in the formula is an integer of 30 to 85.

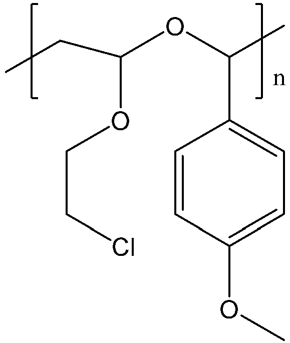

To a three-necked flask purged with nitrogen, 34 mL of dehydrated toluene, 3.8 g of purified 2-chloroethyl vinyl ether, 4.8 g of anisaldehyde, and 4.7 g of 1,4-dioxane were added. The resulting solution was cooled to 5 °C or lower, 1.0 mL of a 0.20 mol/L hexane solution of ethanesulfonic acid was added, and the mixture was stirred for 5 minutes in an ice bath. Thereafter, the mixture was cooled to -70 °C or lower, 1.0 mL of a 0.20 mol/L solution of gallium chloride was added, and the mixture was stirred uniformly while maintaining the temperature at - 70 °C or lower to carry out a polymerization reaction. After 7 hours, 25 mL of methanol to which a minute amount of aqueous ammonia had been added was added to terminate the reaction.

The solution in which the reaction had been terminated was returned to room temperature, 100 mL of dichloromethane was added, and the mixture was washed with ion-exchanged water until neutral. After dehydration, the solvent and the like were removed by distillation under reduced pressure, thereby obtaining 8.9 g of a pale yellow oil.

The resulting crude product was subjected to repeated purification by reprecipitation, thereby obtaining 4.4 g of a white solid.

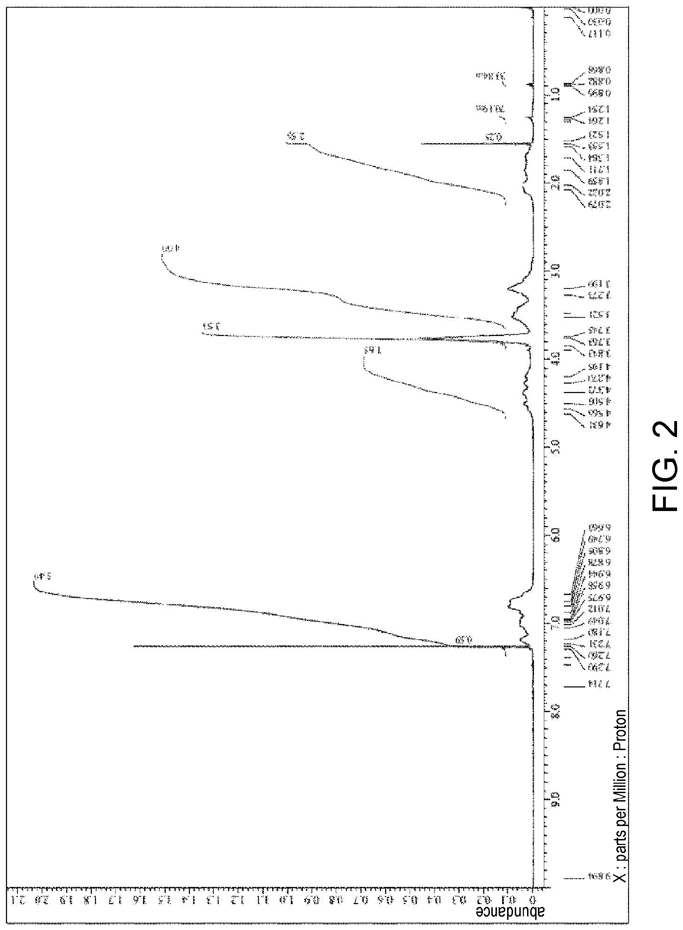

The resulting solid was confirmed to be poly(CEVE-alt-pMeOBzA) by a ¹H-NMR spectrum shown in FIG. 2. This compound had a number average molecular weight of 9,883, and a value of weight average molecular weight/number average molecular weight was 1.63. The measurement apparatus and analysis conditions for the ¹H-NMR spectrum are shown below. The weight average molecular weight and the number average molecular weight are values in terms of polystyrene determined from the following conditions using gel permeation chromatography (GPC).

### (¹H-NMR)

Apparatus: JNM-ECZ500R/S1 (500 MHz), manufactured by JEOL Ltd.
Solvent: deuterated chloroform
Measurement temperature: room temperature
Internal standard substance: tetramethylsilane

### (GPC measurement conditions)

Pump: NexeraX2 LC-30AD, manufactured by Shimadzu Corporation
Mobile phase: tetrahydrofuran
Measurement temperature: 35 °C
Flow rate: 0.5 mL/min
Column: Shodex GPC LF-804×1, manufactured by Resonac Corporation (formerly Showa Denko K.K.)
Detector: RID-20A

### (Synthesis of Temperature-Responsive Polymer)

### Synthesis of Poly([Me2Im][BF4]-alt-pMeOBzA)

Poly(ethyl vinyl ether[dimethylimidazolium][tetrafluoroborate]-alt-paramethoxybenzaldehyde) (abbreviated as poly([Me2Im][BF4]-alt-pMeOBzA) in the present specification) synthesized in the Examples was a polymer represented by the following formula. n in the formula is an integer of 30 to 85.

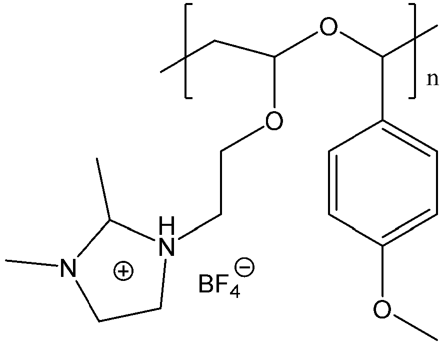

To a three-necked flask purged with nitrogen, 4.4 g of poly(CEVE-alt-pMeOBzA) having a number average molecular weight of 9,883 and a weight average molecular weight/number average molecular weight of 1.63, which was synthesized above, 100 mL of dehydrated N,N-dimethylformamide, 9.9 g of 1,2-dimethylimidazole, and 15.4 g of sodium iodide were added, and the internal temperature was raised to 80 °C. Thereafter, the mixture was stirred while maintaining the internal temperature at around 80 °C. After 72 hours, the mixture was cooled to room temperature.

A small amount of water was added to the resulting reaction solution to dissolve all solids, and the solution was then placed into a cellulose tube for dialysis. The cellulose tube containing the solution was placed in a beaker filled with ion-exchanged water as a buffer, and dialysis was performed during gentle stirring. The ion-exchanged water of the buffer was replaced as appropriate, and dialysis was performed for a total of 24 hours. In this manner, an aqueous solution of a polymer (poly([Me2Im][I]-alt-pMeOBzA)) having iodide anion as counter ion was obtained.

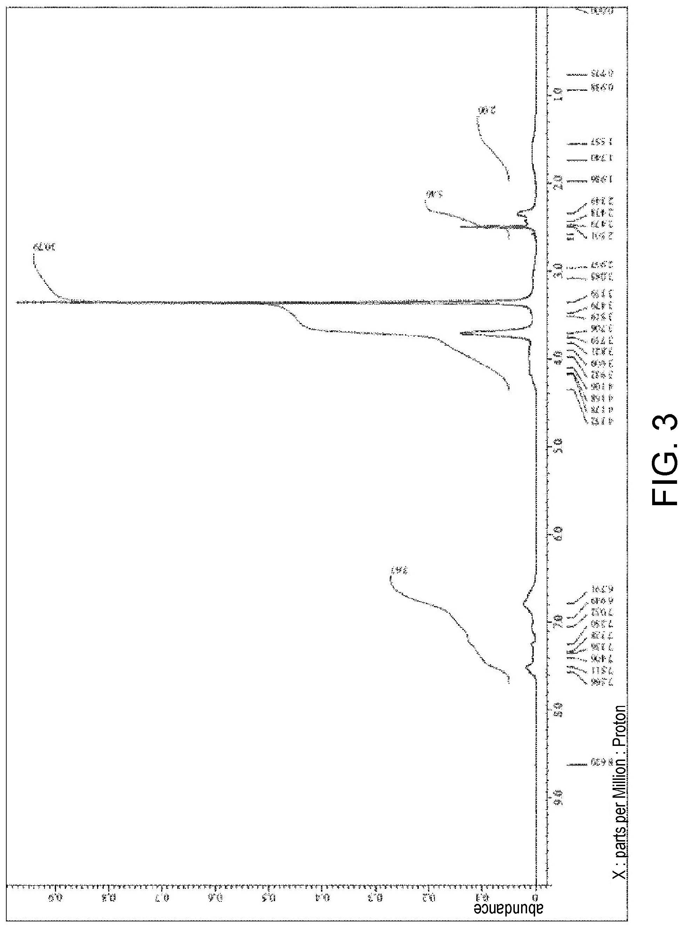

A sodium tetrafluoroborate aqueous solution (an aqueous solution prepared by dissolving 4.5 g of sodium tetrafluoroborate in 30 mL of ion-exchanged water) was added dropwise to the poly([Me2Im][I]-alt-pMeOBzA) aqueous solution obtained above. The dropwise addition was ended at a point when a brown mass formed at the bottom, and the solution was placed into a cellulose tube. The cellulose tube containing the solution was placed in a beaker filled with ion-exchanged water, and dialysis was performed for a total of 24 hours during gentle stirring. Thereafter, the contents of the cellulose tube were placed in a flask, and the solvent and the like were removed by distillation under reduced pressure. The resulting light brown solid was vacuum-dried at 50 °C for 6 hours, and 1.9 g of a light brown solid was obtained. The resulting solid was confirmed to be poly([Me2Im][BF4]-alt-pMeOBzA) by a ¹H-NMR spectrum shown in FIG. 3. The measurement apparatus and analysis conditions for the ¹H-NMR spectrum are shown below.

### (¹H-NMR)

Apparatus: JNM-ECZ500R/S1 (500 MHz), manufactured by JEOL Ltd.
Solvent: DMSO-d6
Measurement temperature: room temperature
Internal standard: tetramethylsilane

### (Preparation of Temperature-Responsive Ionic Solution)

Lithium bis(fluorosulfonyl)imide manufactured by Kishida Chemical Co., Ltd. was dissolved as a salt in acetone (dehydrated) manufactured by Kanto Chemical Co., Ltd. at a concentration of 1 mol/L to prepare a base acetone solution (hereinafter abbreviated as "base solution") in which the salt was dissolved. Poly([Me2Im][BF4]-alt-pMeOBzA) was added as a temperature-responsive polymer to the base solution at 0.4% by weight to prepare a temperature-responsive ionic solution.

### (Method for Measuring Ionic Conductivity)

The ionic conductivity of the temperature-responsive ionic solution was measured as follows. Two planar electrodes having an area of 0.785 cm² were provided to face each other at a distance of 0.5 cm, a space between the electrodes was filled with the temperature-responsive ionic solution, and a resistance R (unit: Ω) between electrodes was measured by an alternating current impedance method. By using the measured resistance R between electrodes, the ionic conductivity (unit: S/cm) was calculated from Expression (1). $\begin{matrix}Ionic \\ conductivity\end{matrix} = \frac{1}{Resistance : R} \times \frac{Distance : 0.5 cm}{Area : 0 . 785 {cm}^{2}}$ Expression (1)

An alternating current impedance was measured under conditions of a frequency of 1 MHz to 10 Hz and an amplitude of 100 mV. In a Nyquist plot (Cole-Cole plot) obtained by the measurement, a value of a real part at a low-frequency end of a semicircle was taken as the resistance R between electrodes.

To measure the temperature dependence of ionic conductivity, the measurement was performed at each temperature of 10 °C, 20 °C, 30 °C, 40 °C, and 50 °C, and the behavior due to temperature rise was measured. An electrochemical measurement apparatus that measured the Nyquist plot herein and the measurement conditions are shown below.

### (Nyquist Plot)

Apparatus: PARSTAT PMC1000, manufactured by Princeton Applied Research
Frequency: 1 MHz to 10 Hz
Amplitude: 100 mV
Temperature: 10 °C, 20 °C, 30 °C, 40 °C, 50 °C

### (Examples 2 to 4, Comparative Example 1)

The ionic conductivity was measured in the same manner as in Example 1, except that the solvent type and the like of the temperature-responsive ionic solution were changed as shown in Table 1.

**[Table 1]**

| | Example 1 | Example 2 | Example 3 | Example 4 | Comparative Example 1 |
|---|---|---|---|---|---|
| Salt | Lithium bis(fluorosulfonyl)imide | | | | |
| Salt concentration | 1 mol/L | | | | |
| Organic solvent | Acetone | Acetone | Acetone/PC (97/3) | Acetone/mixed solvent (EC:DEC:EMC=1:1:1) (94/6) | Acetone |
| Temperature-responsive polymer | Poly([Me2Im][BF4]-alt-pMeOBzA) | | | | Not added |
| Polymer content | 0.4 wt% 1.0 wt% 0.4 wt% 0.4 wt% | | | | |

### (Evaluation of Temperature Dependence of Ionic Conductivity)

To evaluate the temperature dependence of ionic conductivity, an ionic conductivity change rate was calculated according to Expression (2). $\begin{matrix}Ionic conductivity \\ change rate\end{matrix} \left(%\right) = \frac{Ionic conductivity at each temperature}{Ionic conductivity at 10 ° C} \times 100$ Expression (2)

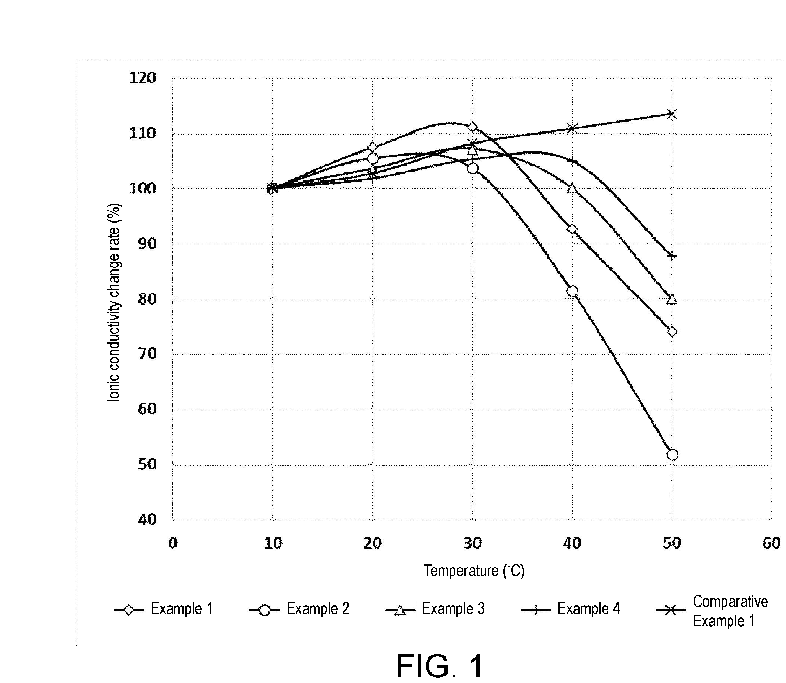

The obtained ionic conductivity change rate is shown in FIG. 1. FIG. 1 shows the evaluation results of the temperature dependence of ionic conductivity measured in Examples 1 to 4 and Comparative Example 1, and is a graph in which the ionic conductivity change rate is plotted with respect to each measurement temperature. That is, FIG. 1 is a graph showing a relationship between measurement temperature and ionic conductivity change rate.

In general, as the temperature rises, the viscosity of a solution decreases, thereby making it easy for ions to move. Hence, the ionic conductivity gradually increases as the temperature rises. In Examples 1 to 4, the ionic conductivity increased with a change from 10 °C to 20 °C, but decreased at 40 °C and 50 °C. This is because the temperature-responsive polymer having an LCST causes phase separation at or above the LCST, thus reducing ion movement. In Examples 1 to 4, the ionic conduction properties that changed with temperature were controlled.

On the other hand, in Comparative Example 1, the ionic conductivity gradually increased as the temperature rose, and the ionic conduction properties were not controlled.

### Industrial Applicability

According to the present invention, a very simple method for controlling ionic conduction properties in a temperature-responsive ionic solution using a temperature-responsive polymer is provided. Thus, the method for controlling ionic conduction properties of the present invention can be utilized in various sensors such as fuel cells, lithium-ion batteries, and chemical sensors.

## Claims

1. A method for controlling ionic conduction properties, in which an ionic conductivity of a temperature-responsive ionic solution is changed according to temperature, the temperature-responsive ionic solution containing a temperature-responsive polymer, a salt, and an organic solvent, in which the salt is dissociated into ionic components.

2. The method for controlling ionic conduction properties according to claim 1, wherein the temperature-responsive polymer is a polymer that exhibits lower critical solution temperature-type phase separation.

3. The method for controlling ionic conduction properties according to claim 1, wherein the temperature-responsive polymer is a polymer that exhibits lower critical solution temperature-type phase separation in the temperature-responsive ionic solution.

4. The method for controlling ionic conduction properties according to any one of claims 1 to 3, wherein the organic solvent comprises a carbonate-based organic solvent.

5. The method for controlling ionic conduction properties according to any one of claims 1 to 3, wherein the salt is a lithium-containing salt.

6. The method for controlling ionic conduction properties according to any one of claims 1 to 3, wherein the temperature-responsive ionic solution contains 30% by weight or less of the temperature-responsive polymer.
